# DEMANDE DE BREVET EUROPEEN

(11) **EP 0 824 066 A1**
(43) Date de publication de la demande: **18.02.1998**
(21) Numéro de dépôt: 97401925.9
(22) Date de dépôt: 13.08.1997
(51) Int. Cl.: B32B 3/12, E04C 2/36

(54) **Panneau sandwich en nid d'abeille ventilé et procédé de ventilation d'un tel panneau**

(30) Priorité: 14.08.1996 FR 9610195
(71) Demandeur: Hispano-Suiza, 75015 Paris (FR)
(72) Inventeur: Gonidec, Patrick, 76290 Montivilliers (FR); Le Docte, Thierry Jacques Albert, 76700 - Harfleur (FR); Vauchel, Guy Bernard, 76610 - Le Havre (FR)

(57) **Abrégé**

Le panneau est susceptible de profiter d'une ventilation forcée par un flux aéraulique à travers ses alvéoles munis de perforations tirant profit des différences de pression de part et d'autre du panneau ou le long du panneau.

Les deux parois externes (61E, 61I) comprennent, pour de nombreux alvéoles (65, 67), des trous (63) sur la première paroi (61E), des trous (66) sur la deuxième paroi (61I) et quelques trous (68) dans les cloisons internes (62) pour permettre différentes sortes de circulations d'air à travers les alvéoles à ventiler.

Application à tous les panneaux susceptibles d'être refroidis et, en particulier, à la paroi de révolution entre le flux chaud et le flux froid d'un turboréacteur.

## Description

### Domaine de l'invention

La présente invention concerne la ventilation d'un grand nombre de panneaux sandwich du type en nid d'abeille, c'est-à-dire alvéolés. On pense, en particulier, aux panneaux sandwich utilisés dans les nacelles moteur des turboréacteurs, par exemple pour constituer des parties fixes, au niveau des inverseurs de poussée, entourant le moteur. Toutefois, l'invention peut s'appliquer dans n'importe quel domaine où des panneaux sandwich, du type en nid d'abeille, sont utilisés, en particulier dans des environnements thermiques difficiles, tels que l'énergie, l'automobile ou d'autres moyens de transport.

### Art antérieur et problème posé

De manière générale, dans les turboréacteurs, deux flux d'air traversent longitudinalement le moteur. Un flux primaire ou chaud traverse le moteur par sa chambre de combustion. Le flux secondaire ou flux froid est comprimé par une soufflante mue par l'énergie développée par le flux primaire. Il est ainsi comprimé et accéléré dans une veine, appelée « veine secondaire » ou « canal flux froid » qui entoure le flux chaud. La partie centrale de cette veine secondaire annulaire entoure le turboréacteur et constitue le capot moteur. Elle a quatre fonctions, qui sont :
- guider le flux froid ;
- évacuer le flux thermique rayonné par le moteur en le transmettant par convexion forcée au flux froid ;
- permettre la captation d'une faible partie du débit de flux froid pour assurer la ventilation du compartiment moteur ; et
- atténuer le bruit du moteur et de la soufflante par des perforations de la peau du panneau sandwich qui est en contact avec le flux froid.

De par sa situation et les conditions de fonctionnement, cette structure doit résister à la différence de pression entre le flux froid et le compartiment moteur. Ceci oblige à la doter d'une bonne tenue structurale. Dans ce but, on utilise, la plupart du temps, des panneaux sandwich du type en nid d'abeille.

Les panneaux sandwich sont généralement constitués de deux parois ou peaux métalliques ou composites et d'une zone centrale de matériau en nid d'abeille, métallique ou composite. Dans certains cas, les cellules ou alvéoles du nid d'abeille servent de résonateur de HELMOLTZ quand elles sont mises en communication avec l'extérieur. On obtient alors un panneau acoustique qui absorbe le bruit dans une certaine gamme de fréquences.

Dans le cadre de l'utilisation de tels panneaux acoustiques pour constituer la paroi entre le flux chaud et le flux froid d'un turboréacteur, celle-ci n'est pas refroidie et son intégrité mécanique n'est assurée que par une protection thermique installée à l'intérieur du compartiment moteur.

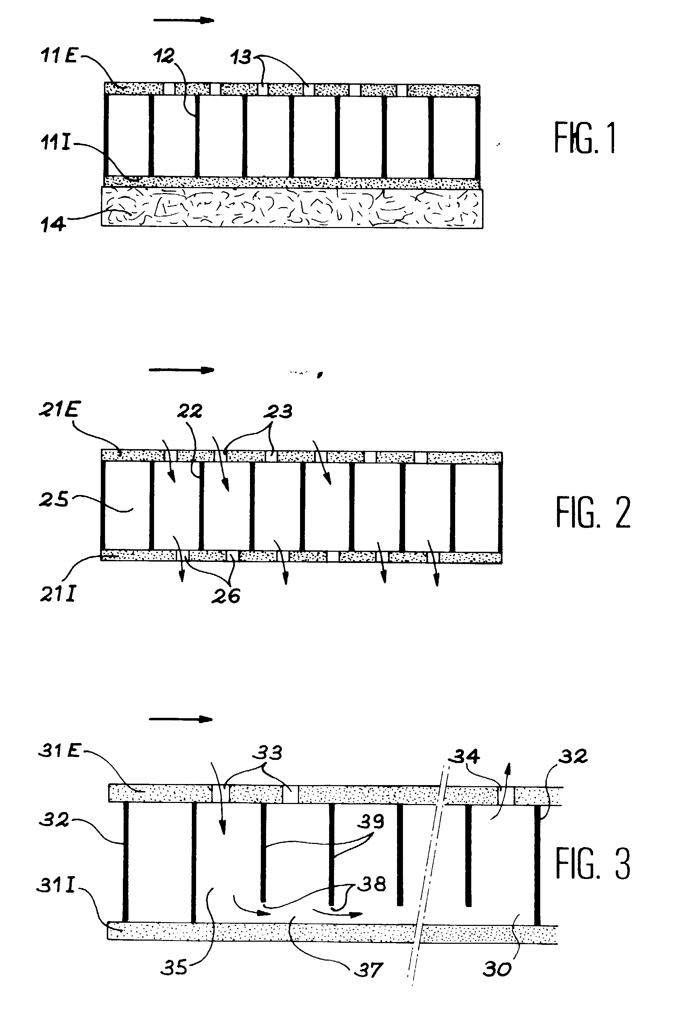

La figure 1 montre une telle structure comportant une première paroi extérieure 11E, une deuxième paroi intérieure 11I, des cloisons 12, perpendiculaires aux deux parois intérieure 11I et extérieure 11E. Ces dernières sont ainsi référencées 11E et 11I car elles constituent les peaux externe et interne du panneau dans son application comme cloison séparant le flux froid et le carter moteur d'un turboréacteur. Des orifices 13 sont prévus dans la première paroi extérieure 11E dans le but de constituer un panneau acoustique. La protection interne 14 est placée contre la surface externe de la paroi intérieure 11I.

Il en est de même pour tous les panneaux sandwich soumis à un flux thermique important et nécessitant donc une protection thermique. Ceci implique l'utilisation d'une masse supplémentaire, associée éventuellement à une mise en oeuvre délicate. De plus, il faut prendre en compte le fait que cette protection thermique est relativement onéreuse.

Le but de l'invention est de remédier à cet inconvénient en proposant un panneau sandwich du type nid d'abeille, par exemple acoustique, mais refroidi ou ventilé.

### Résumé de l'invention

A cet effet, un premier objet principal de l'invention est un procédé de ventilation d'un panneau sandwich en nid d'abeille comportant des alvéoles, consistant à créer une circulation d'air à travers certains de ces alvéoles.

Un deuxième objet principal de l'invention est un panneau sandwich en nid d'abeille comportant :
- deux parois externes parallèles ;
- des cloisons internes fixées aux parois externes et placées au milieu de ces deux parois externes pour constituer des alvéoles.

Selon l'invention, chaque alvéole à ventiler possède au moins deux trous mettant cet alvéole en liaison aéraulique avec l'extérieur.

Dans une première réalisation du panneau selon l'invention, les alvéoles à ventiler comprennent un trou sur chaque paroi externe.

Dans une deuxième réalisation, un premier alvéole possède un premier trou dans une première paroi externe et un deuxième trou dans une cloison interne commune avec un deuxième alvéole qui possède au moins une liaison aéraulique avec l'extérieur. Dans ce dernier cas, une première possibilité consiste en ce que la liaison aéraulique est constituée d'un trou dans la cloison avec un troisième alvéole ou un énième alvéole qui a lui également une liaison aéraulique avec l'extérieur, pour constituer une circulation d'air entre les deux peaux du sandwich. Cette circulation forcée est mue, soit par la différence de pression entre la veine et le compartiment moteur, soit par la différence de pression entre les trous d'entrée et de sortie donnant tous deux dans la veine. Dans ce dernier cas, un nombre suffisant de cloisons d'alvéoles est perforé, de manière à utiliser le gradient de pression le long du flux secondaire dans le but recherché.

Une deuxième possibilité consiste en ce que la liaison aéraulique ait un trou avec la première paroi externe.

Une troisième possibilité consiste en ce que cette liaison aéraulique soit constituée d'un trou dans la deuxième paroi externe.

Dans une troisième réalisation du panneau selon l'invention, on peut utiliser une pièce rapportée sur le panneau ayant deux parois externes se substituant aux parois externes du panneau, au moins deux cloisons internes se substituant aux cloisons internes du panneau et définissant au moins un alvéole à ventiler et qui possède un trou sur chaque paroi externe dans un même alvéole à ventiler.

Une réalisation particulière des trous dans les parois externes consiste à les prévoir de manière oblique dans chacune des parois externes.

Une deuxième réalisation possible des trous dans les parois externes consiste à en prévoir certains au niveau d'une cloison interne séparant deux alvéoles.

Dans le cas d'une circulation d'air longitudinale des deux côtés du panneau, la liaison aéraulique de la première paroi externe vers la deuxième s'effectue avec des trous de la première paroi placés en amont des trous prévus dans la deuxième paroi externe.

Il est possible de donner aux différents trous des formes améliorées. En effet, on peut envisager que les trous d'entrée prévus dans la première paroi externe soient évasés pour favoriser l'entrée du flux d'air.

Dans ce cas, les trous d'entrée sont, de préférence, poinçonnés, la paroi externe étant enfoncée vers l'intérieur.

De même, on prévoit que les trous des cloisons internes soient évasés pour favoriser le passage du flux d'air.

Dans ce cas, les trous des cloisons internes sont, de préférence, poinçonnés pour présenter un léger rebord aval favorisant la circulation du flux d'air.

On prévoit également que les trous d'entrée prévus dans la première paroi soient en forme d'écope, la première paroi externe étant soulevée vers l'extérieur sur le côté amont du trou de sortie.

De même, les liaisons aérauliques avec l'extérieur du panneau peuvent être des trous de sortie en forme d'écope, la paroi externe étant soulevée sur le côté aval du trou de sortie.

### Liste des figures

L'invention et ses différentes caractéristiques seront mieux comprises à la lecture de la description suivante, accompagnée de plusieurs figures représentant en coupe, respectivement :
- figure 1, un panneau sandwich alvéolé selon l'art antérieur ;
- figure 2, une première réalisation du panneau sandwich selon l'invention ;
- figure 3, une deuxième réalisation du panneau sandwich selon l'invention ;
- figure 4, une troisième réalisation du panneau sandwich ;
- figure 5, une quatrième réalisation du panneau sandwich selon l'invention ;
- figure 6, une cinquième réalisation du panneau sandwich selon l'invention ;
- figure 7, une sixième réalisation du panneau sandwich selon l'invention avec une pièce rapportée ;
- figure 8, une septième réalisation du panneau sandwich selon l'invention ;
- figure 9, une huitième réalisation du panneau sandwich selon l'invention ;
- figure 10, une neuvième réalisation du panneau sandwich selon l'invention ;
- figure 11, une dixième réalisation du panneau sandwich selon l'invention ;
- figure 12, une onzième réalisation du panneau sandwich selon l'invention ;
- figure 13, une douzième réalisation du panneau sandwich selon l'invention ;
- figure 14, une treizième réalisation du panneau sandwich selon l'invention ; et
- figure 15, une vue cavalière d'une cellule d'un panneau représenté par la figure 14.

### Description détaillée des réalisations de l'invention

En référence à la figure 2, la réalisation la plus simple du panneau sandwich selon l'invention consiste à conserver les trous 23 sur la première paroi externe 21E, un trou étant prévu pour chaque alvéole. En d'autres termes, entre chaque cloison interne 22, se trouve, sur la première paroi 21E, un trou 23. En correspondance, sur la deuxième paroi 21I se trouve un trou 26 correspondant à chaque trou 23 de la première paroi 21E, pour chaque alvéole 25.

On comprend ainsi qu'une circulation d'air puisse avoir lieu de part et d'autre du panneau sandwich, comme le montrent les flèches. En effet, le compartiment entourant le moteur se trouve en général en dépression par rapport à la veine secondaire. De plus, si, comme c'est le cas pour la paroi séparant le flux froid du flux chaud dans un turboréacteur, deux circulations longitudinales d'air ont lieu de part et d'autre du panneau sandwich, il peut s'avérer judicieux de décaler légèrement les trous 23 et 26 les uns par rapport aux autres dans chaque alvéole. En effet, on imagine que ces deux circulations d'air longitudinales le long du panneau vont de gauche à droite, comme le montre la flèche horizontale et que la circulation d'air à travers du panneau va de haut en bas, c'est-à-dire de la première paroi externe 21E vers la deuxième paroi externe 21I. Dans ce cas, pour favoriser cette circulation transversale, les trous 23 de la paroi externe 21E sont placés au début de la portion de la première paroi externe 21E pour chaque alvéole 25. En correspondance, les trous 26 de la deuxième paroi externe 21I sont placés à la fin de chaque portion correspondante de la première paroi externe 21I pour chaque alvéole 25. On comprend ainsi que la circulation à travers le panneau sandwich soit favorisée pour aller du haut vers le bas, puisqu'une légère composante longitudinale de gauche à droite est conservée lors de la traversée du panneau sandwich par l'air.

En référence à la figure 3, une deuxième solution consiste à conserver les trous 33 et 34 dans la première paroi externe 31E, tout du moins pour certains alvéoles 35, et à pratiquer des trous supplémentaires 38 dans une ou plusieurs cloisons internes 39 pour provoquer une circulation aéraulique entre deux alvéoles adjacents 35 et 37, dont la cloison commune 39 possède un trou 38. On comprend ainsi que la circulation de l'air puisse rentrer dans un alvéole 35 pour traverser un ensemble de plusieurs alvéoles suivants 37 et ressortir, soit par un trou 34 pratiqué dans la première paroi externe 31E, soit par un trou, non représenté, pratiqué sur la deuxième paroi externe 31I. Lorsque l'on utilise des trous de communication 38 entre deux alvéoles adjacents, on favorise ainsi un drainage transversal des alvéoles. Dans cette solution, certaines cloisons internes 32 ne possèdent pas de trous dans les peaux du sandwich. Ce mode de réalisation utilise l'évolution de pression statique le long des parois de la nacelle. Les trous sont situés en aval des trous d'entrée, sauf singularité géométrique particulière.

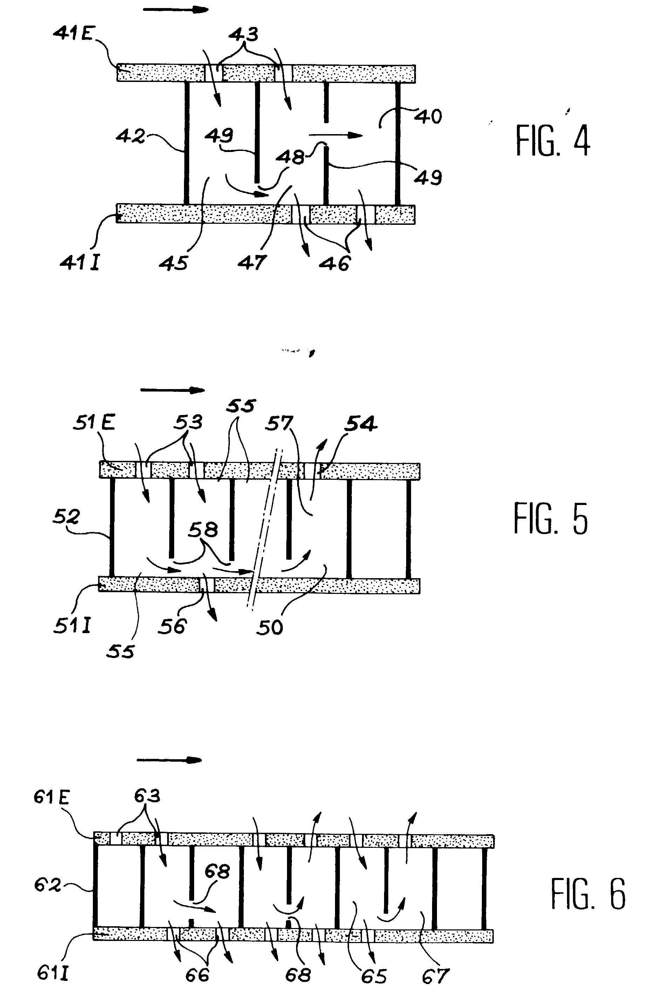

En référence à la figure 4, une troisième réalisation de l'invention combine les deux premières, représentées par les figure 2 et 3. En effet, on y retrouve des trous 43 sur la première paroi externe 41E, des trous 46 sur la deuxième paroi externe 41I et des trous 48 dans certaines cloisons internes 49. On peut ainsi organiser plusieurs types de circulation aéraulique à travers le panneaux. Par exemple, une première peut débuter par un trou 43 sur la première paroi externe 41E, déboucher dans un premier alvéole 45 qui est en communication par un trou 48 d'une cloison interne 49 avec un deuxième alvéole 47. Ce dernier peut, à la fois, avoir un trou 46 dans la deuxième paroi externe 41I pour ménager une sortie à l'air et un deuxième trou 48 dans une cloison interne 49 débouchant dans un troisième alvéole 40 qui possède un seul trou 46 dans la deuxième paroi externe 41I. On note que le deuxième alvéole 47 peut également comporter un trou 43 dans la première paroi externe 41E pour ménager une deuxième entrée d'air dans le panneau.

La figure 5 montre une quatrième réalisation qui reprend en partie celle de la figure 4, mais en y ajoutant une solution supplémentaire en ce qui concerne le parcours aéraulique possible à travers le panneau.

En effet, on y retrouve des trous 53 dans la première paroi externe 51E débouchant dans des alvéoles 55, comprenant chacun un trou de communication 58 avec leur alvéole respectif adjacent. On y retrouve également un trou de sortie 56 dans la deuxième paroi externe 51I.

Par contre, plusieurs alvéoles 57 adjacents possèdent un trou de communication 58, de manière à ce que la circulation de l'air à travers le panneau puisse continuer à l'intérieur de celui-ci, jusqu'à un dernier alvéole 50 qui ne possède qu'un trou de communication 58 en aval par rapport à la circulation générale de l'air autour du panneau, symbolisée par la flèche placée à l'extérieur de celui-ci. Par contre, il possède également un trou 54 sur la première paroi externe 51E permettant ainsi à une partie du flux aéraulique de ressortir du côté par lequel il est entré.

La figure 6 décrit une cinquième réalisation qui est une combinaison des différentes réalisations, précédemment décrites. En effet, des trous 63 sont pratiqués dans la première paroi externe 61E, pour l'entrée et la sortie du flux aéraulique. Des trous de sortie 66 sont prévus sur la deuxième paroi externe 61I. De plus, des trous de communication 68 sont prévus entre deux alvéoles 65 et 67 qui sont adjacents. Le deuxième alvéole 67 possède, dans ce cas, un trou 63 prévu dans la première paroi externe 61E pour la sortie du gaz du même côté que celui par lequel il est entré.

On note que, dans toutes ces réalisations, le panneau peut comprendre des alvéoles qui ne font pas l'objet de circulation d'air.

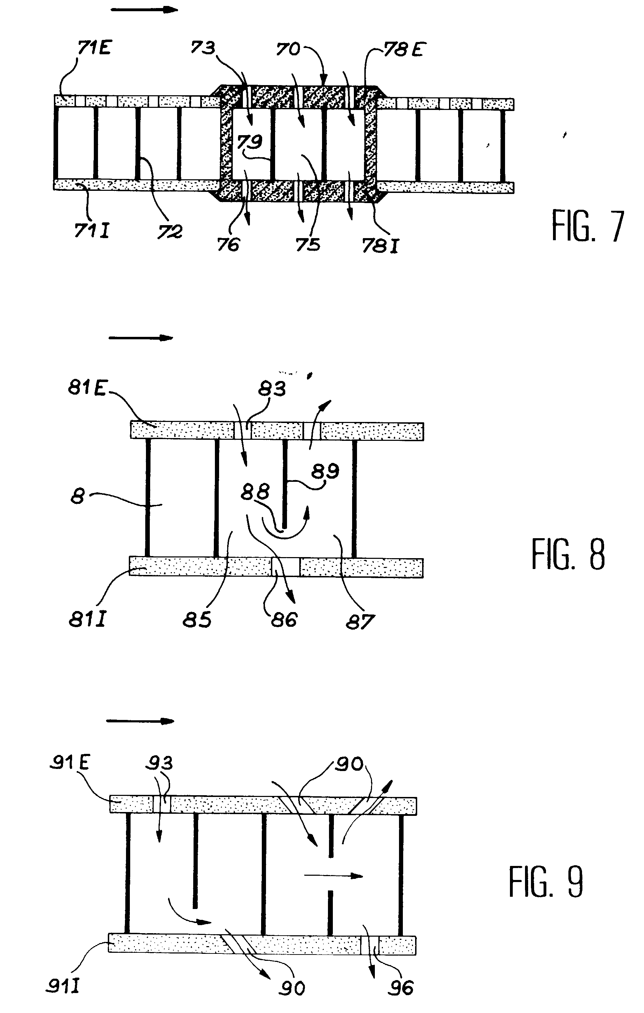

La réalisation décrite par la figure 7 est d'un autre type, puisqu'elle utilise une pièce rapportée 70. En effet, le panneau comprend, de manière connue, une première paroi externe 71E comprenant des trous habituellement prévus dans un tel panneau. Les alvéoles 72, placés entre la première paroi externe 71E et la deuxième paroi externe 71I du panneau, ne font donc pas l'objet d'une circulation d'air. Par contre, la pièce rapportée 70 possède également une première paroi externe 78E et une deuxième paroi externe 78I remplaçant, au niveau où la pièce 70 est installée dans le panneau, les parois externes 71E et 71I du panneau. Elles sont prévues un peu plus épaisses, mais ceci n'est qu'un mode de réalisation. Par contre, les alvéoles 75 se trouvant à l'intérieur de la pièce rapportée 70 possèdent à la fois des trous d'entrée 73 sur la première paroi externe 78E et des trous de sortie 76 sur la deuxième paroi externe 78I.

La septième réalisation décrite par la figure 8 met en jeu deux alvéoles adjacents 85 et 87. Le premier alvéole 85 possède un trou d'entrée 83 dans la première paroi externe 81E, tandis que le deuxième alvéole 87 possède un trou de sortie 83 toujours sur la première paroi externe 81E. Cette réalisation se distingue par la présence d'un trou de sortie 86 dans la deuxième paroi externe 81I au niveau d'une cloison commune 89 dans laquelle est également pratiqué un trou de communication 88 entre les deux alvéoles 85 et 87. Cette réalisation est particulièrement bien adaptée au panneau sandwich acoustique comportant déjà les trous 83 sur la première paroi externe 81E. En effet, il suffit de pratiquer un trou 86 entre deux alvéoles 85 et 87, dans la deuxième paroi externe 81I, sur une profondeur suffisante pour usiner en même temps le trou de communication 88 entre les deux alvéoles 85 et 87 dans la cloison interne 89.

Les réalisations des figure 6 et 8 sont applicables lorsque la première paroi externe 81E est soumise à une pression externe non uniforme. L'écoulement de la ventilation peut donc soit sortir du côté de la première paroi externe 61E, 81E, soit vers la seconde paroi externe 61I, 81I, en utilisant l'évolution des pressions de part et d'autre du panneau.

Les trous peuvent avoir des dimensions uniformes ou non, leurs formes pouvant être cylindrique, conique, fraisée, évolutive.

En référence à la figure 9, l'orientation des trous peut être normale aux parois externes 91E et 91I, comme le premier trou 93 et le dernier trou 96. Par contre, comme les trous 90, ils peuvent être obliques par rapport à ces parois externes pour permettre l'optimisation de la ventilation, l'acoustique et/ou l'aérodynamisme du panneau.

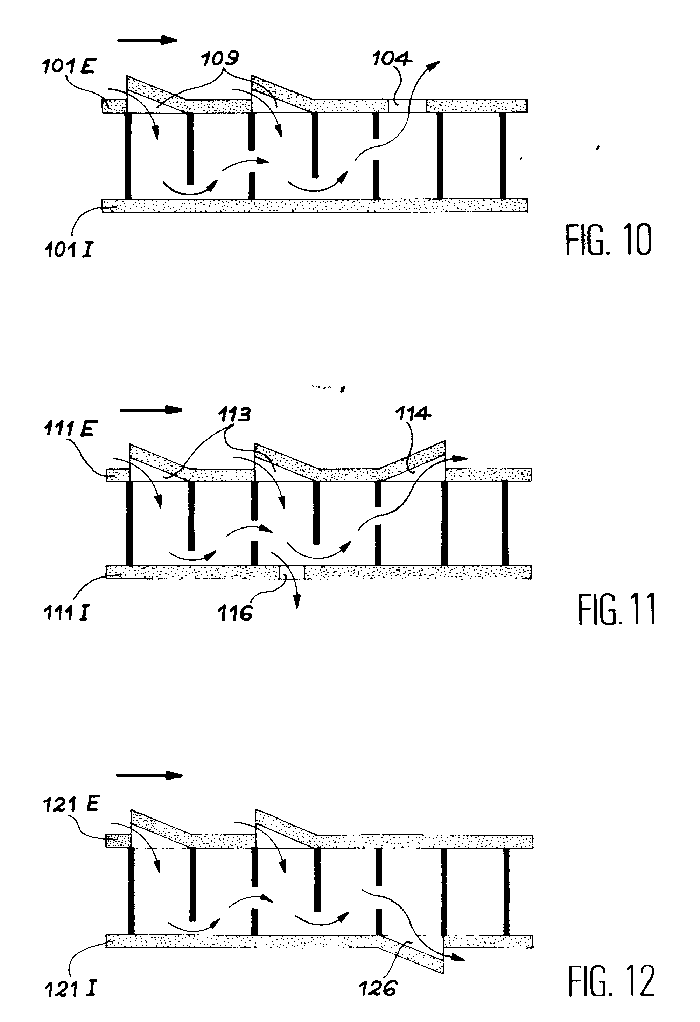

En référence à la figure 10, il est avantageux d'ouvrir les trous d'entrée 103 prévus sur la première paroi externe 101E, de façon à ce que ces trous d'entrée 103 ressemblent à de petites écopes. En d'autres termes, ces trous d'entrée 103 sont constitués par un soulèvement partiel de la première paroi externe 101E du côté amont de chacun des trous d'entrée 103 par rapport au sens d'écoulement du flux d'air symbolisé par les flèches. Ainsi, chaque trou d'entrée 103 a toutes les chances de capter la plus grande partie de l'air du flux circulant au ras de la surface de la première paroi externe 101E pour l'attirer à l'intérieur du panneau, entre cette première paroi externe 101E et la deuxième paroi externe 101I. Le flux ressort par des trous de sortie 104 prévus sur l'une de ces deux parois externes 101E ou 101I.

En référence à la figure 11, ressemblant à la figure 10, on peut également prévoir que des trous de sortie 114 soient agencés de manière analogue aux trous d'entrée 113, c'est-à-dire en forme de petites écopes. Dans ce cas, le sens de cette forme est inversé de manière à ce que l'ouverture du trou de sortie 114 soit du côté aval de ce trou de sortie 114 pour favoriser la sortie à l'extérieur de la première surface externe 111E du flux venant de l'intérieur. Des trous de sortie 116 peuvent également être prévus dans une forme normale.

En référence à la figure 12, il est toutefois possible de prévoir ces trous de sortie 126 sur la deuxième paroi externe 120I dans une forme analogue à ceux prévus sur la figure 11 et repérés 114.

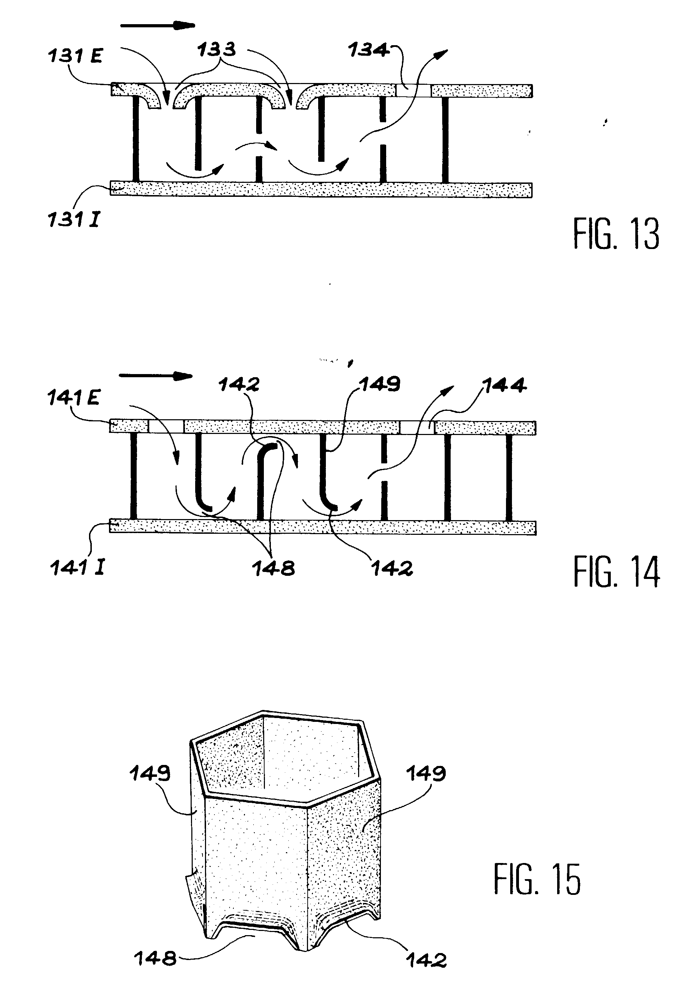

En référence à la figure 13, les trous d'entrée 133 prévus sur la première paroi externe 131E ont une forme évasée, ouverte vers l'extérieur du panneau, de manière à ce que le début de ces trous d'entrée 133 soit d'un grand diamètre et favorise l'arrivée d'une partie du flux d'air circulant, comme l'indique la flèche en trait fort, de gauche à droite, le long du panneau.

Dans la réalisation décrite sur cette figure 13, la première paroi externe 131E a été enfoncée, par exemple par poinçonnage, au niveau de ces trous d'entrée 104, de sorte que cette première paroi externe 131E s'enfonce partiellement au niveau de chaque trou d'entrée 133 vers l'intérieur du panneau. En d'autres termes, les trous d'entrée 133 ont une forme d'entonnoir.

En référence à la figure 14, il est également possible de modifier les trous de communication 148 pratiqués dans les cloisons internes 149 entre chaque alvéole, ou cellule. En effet, ces trous de communication 148 peuvent avoir une forme ressemblant à celle des trous d'entrée 133 de la figure 13, c'est-à-dire évasée. La cloison interne 149 étant, dans ce cas, enfoncée, ou poinçonnée. Le bord de la cloison interne 149 se trouve donc enfoncé vers l'aval et constitue une sorte de bord recourbé 142. De plus, dans le cas où ces trous de communication 148 sont placés près des parois externes 141E et 141I, le flux d'air traversant l'intérieur du panneau a tendance à lécher les surfaces internes des parois externes 141E et 141I lorsqu'il passe à travers ces trous de communication 148. Ceci facilite le refroidissement de ces parois externes.

La figure 15 montre la réalisation d'une cellule comportant des cloisons internes 149 possédant chacune, à l'une de leurs extrémités, un trou de communication 148. Dans cette réalisation, la cloison a été légèrement enfoncée au niveau du trou de communication 148, ou repliée comme le montre la présence des bords recourbés 142. Cette technique d'obtention des trous de communication 148 est également appelée « technologie de collet battu ». On constate que la cellule représentée possède six cloisons internes. Ceci n'est qu'un type de réalisation utilisé notamment dans le cas des panneaux sandwich en nids d'abeille.

Cette technique illustrée par les différentes réalisations qui viennent d'être décrites s'applique aussi bien à un panneau sandwich acoustique à une seule couche qu'à un panneau sandwich à plusieurs couches, ainsi qu'un panneau sandwich acoustique optimisé par des perforations latérales.

Dans certaines réalisations, par exemple celles des figures 3, 4, 5, 8, 9 et 14, des trous de communication entre deux alvéoles adjacents peuvent être placés près de la paroi. Ceci permet aux flux aéraulique circulant dans ces alvéoles de venir lécher la paroi et d'améliorer le refroidissement de cette dernière.

La disposition et l'orientation des différents trous permettent de maîtriser le sens de l'écoulement du flux d'air à travers le panneau.

Ces réalisations s'appliquent à des panneaux en matériaux composites imprégnés de résines époxy, en matériaux métalliques ou en un mélange métallique/composite.

Dans le cadre de l'application des panneaux sandwich à la paroi séparant le flux d'air froid au flux d'air chaud dans un turboréacteur, on note que les réalisations de la présente invention ne provoquent généralement pas de perturbations dans l'écoulement des flux, notamment du flux froid.

Il est à noter que, selon son utilisation, le panneau sandwich doit être plus ou moins ventilé. Dans le cadre de son application à un turboréacteur, certaines zones à ventiler sont plus chaudes que d'autres. Pour tendre une température de service uniforme d'une grande partie d'un même panneau sandwich, il est nécessaire de fournir une ventilation accrue de ces zones, soit par un accroîssement du nombre de perforations dans les parois externes et dans les cellules, soit en augmentant la taille de ces trous, en fonction de la circulation d'air mesurée. Il en résulte donc que, sur un même panneau, une irrégularité de la répartition des tailles des trous peut être rencontrée fréquemment.

Compte tenu des différences de pression existant de part et d'autre d'un panneau sandwich utilisé sur la cloison séparant le flux froid et le flux chaud d'un turboréacteur et existant également d'un endroit à l'autre, la ventilation peut être plus ou moins forcée. Dans ce cas, l'aménagement de certains trous d'entrée et de sortie, ou même de communication, peut donc être particulièrement efficace pour permettre un gros débit de flux, ou une grande vitesse d'écoulement. On peut ainsi adapter la forme et le nombre des trous aux paramètres d'écoulement de l'air dans la veine du moteur, notamment aux différences de pression le long de la paroi du capot moteur.

D'autre part, on note également que, lors de son trajet aéraulique à travers le panneau, l'air se réchauffe et améliore les capacités acoustiques du panneau sandwich en nid d'abeille.

Lorsque les trous de sortie du flux d'air à travers le panneau se trouvent dans une zone supersonique du flux froid d'une paroi de turboréacteur, ceci peut contribuer à minimiser la traînée de la nacelle de ce dernier.

Enfin, s'il est interdit d'installer des ventilations dans la zone supérieure du compartiment moteur d'un turboréacteur pour cause de propagation possible d'un incendie, les réalisations de la présente invention fournissent une ventilation dont les trous de communication permettent le confinement d'un tel incendie.

## Revendications

1. Procédé de ventilation d'un panneau sandwich en nid d'abeille, comprenant des alvéoles (25,..., 85, 37, 87), caractérisé en ce qu'une disposition spécifique de trous (23,..., 93, 26,..., 86) est réalisée obligeant à une ventilation forcée par une mise en communication de zones de pressions différentes soit de part et d'autre du panneau, soit le long de celui-ci au travers des alvéoles.

2. Panneau sandwich en nid d'abeille comprenant :
- deux parois externes (21E,..., 141E, 21I,..., 141I), parallèles ;
- des cloisons internes (22,..., 72, 39,..., 89 et 149) fixées aux deux parois externes pour constituer des alvéoles (25,..., 85, 37, 97),
caractérisé en ce que les alvéoles à ventiler ont au moins chacun deux trous (23,..., 143, 26,..., 126, 38,..., 148) mettant au moins un alvéole en liaison aéraulique avec l'extérieur du panneau.

3. Panneau selon la revendication 2, caractérisé en ce que chaque alvéole (25) possède un trou (23, 26) sur chaque paroi externe (21E, 21I).

4. Panneau selon la revendication 2, caractérisé en ce qu'il comprend un premier ensemble d'alvéoles (35) avec un trou (33,..., 63, 83,..., 143) dans la première paroi externe (31E) et un trou (38,..., 68, 88, 98 et 148) dans une cloison interne (39,..., 89 et 149) commune avec un ensemble d'alvéoles suivant (37,..., 87) qui a au moins une liaison aéraulique avec l'extérieur du panneau.

5. Panneau selon la revendication 4, caractérisé en ce que l'ensemble d'alvéoles suivant (37, 47, 40, 50, 55, 57) comprend pour chaque alvéole deux perforations (38, 48, 58, 148) sur leurs cloisons internes (39, 49, 149), constituant ainsi un réseau aéraulique dans le panneau, aboutissant à un dernier alvéole (30, 40, 50) ayant une liaison aéraulique avec l'extérieur du panneau.

6. Panneau selon l'une des revendications 4 ou 5, caractérisé en ce que la liaison aéraulique est un trou (34, 54, 104, 114, 134, 144) sur la première paroi externe (31E, 51E).

7. Panneau selon l'une des revendications 4 ou 5, caractérisé en ce que la liaison aéraulique est un trou (46, 56, 66, 86, 96, 116, 126) sur la deuxième paroi externe (41I, 51I, 61I, 81I, 91I, 111I, 121I).

8. Panneau selon la revendication 2, caractérisé en ce qu'il comprend une pièce rapportée (70) sur le panneau, ayant deux parois externes (78E, 78I) et au moins deux cloisons internes (79) définissant au moins un alvéole (75) à ventiler et possédant un trou (73, 76) sur chaque paroi externe.

9. Panneau selon la revendication 2, caractérisé en ce que certains trous (90) sur les parois externes (91E, 91I) sont obliques.

10. Panneau selon la revendication 2, caractérisé en ce que certains trous (86) sur une paroi externe (81I) sont communs à deux alvéoles adjacents (85, 87).

11. Panneau selon la revendication 2, caractérisé en ce que, dans le cas d'une circulation d'air longitudinale à l'extérieur des deux côtés du panneau, dans la liaison aéraulique d'une première paroi (21E) vers la deuxième paroi (21I), les trous (23) dans la première paroi externe (21E) sont placés en amont des trous (26) de la deuxième paroi externe (21I) correspondants.

12. Panneau selon la revendication 2, caractérisé en ce que les trous d'entrée (134) prévus dans la première paroi externe (131E) sont évasés pour favoriser l'entrée du flux d'air.

13. Panneau selon la revendication 12, caractérisé en ce que les trous d'entrée (133) sont poinçonnés, la paroi externe (131E) étant enfoncée vers l'intérieur.

14. Panneau selon la revendication 4, caractérisé en ce que les trous (148) des cloisons internes (149) sont évasés pour favoriser le passage du flux d'air.

15. Panneau selon la revendication 14, caractérisé en ce que les trous (148) des cloisons internes (149) sont poinçonnés pour présenter un léger rebord aval (142) favorisant la circulation du flux d'air.

16. Panneau selon la revendication 2, caractérisé en ce que les trous d'entrée (103) prévus dans la première paroi (101E) sont en forme d'écope, la première paroi externe étant soulevée vers l'extérieur sur le côté amont du trou de sortie.

17. Panneau selon la revendication 2, caractérisé en ce que les liaisons aérauliques avec l'extérieur du panneau sont des trous de sortie (114, 126) en forme d'écope, la paroi externe étant soulevée sur le côté aval du trou de sortie.
